Europäisches Patentamt

European Patent Office

Office européen des brevets

(19)

(11) Numéro de publication : **0 331 569 B1**

## FASCICULE DE BREVET EUROPEEN

(12)

(45) Date de publication du fascicule du brevet :
02.01.92 Bulletin 92/01

(51) Int. Cl.⁵ : **B60K 5/12,** F16F 1/52

(21) Numéro de dépôt : 89400542.0

(22) Date de dépôt : 27.02.89

(54) **Elément de support à limiteur de débattement, en particulier pour moteur de véhicule automobile.**

(30) Priorité : 29.02.88 FR 8802468

(43) Date de publication de la demande :
06.09.89 Bulletin 89/36

(45) Mention de la délivrance du brevet :
02.01.92 Bulletin 92/01

(84) Etats contractants désignés :
DE ES GB IT SE

(56) Documents cités :
EP-A- 0 069 787
DE-A- 2 228 394
US-A- 2 459 741
US-A- 4 252 301

(73) Titulaire : HUTCHINSON
2 rue Balzac
F-75008 Paris (FR)

(72) Inventeur : Poirier, Jean
87 Boulevard Jean-Jaurès
F-28200 Chateaudun (FR)

(74) Mandataire : Picard, Jean-Claude Georges et al
Cabinet Plasseraud 84, rue d'Amsterdam
F-75009 Paris (FR)

## Description

La présente invention concerne un élément de support à limiteur de débattement, en particulier pour moteur de véhicule automobile, du type comportant :

a) un support élastique pourvu de moyens de fixation d'une part à la caisse du véhicule, d'autre part au moteur, et

b) un limiteur de débattement également fixé à la caisse et comportant deux ailes encadrant ledit support élastique et propres à en limiter le débattement vers l'avant et vers l'arrière dudit véhicule.

Dans les éléments de support de ce type actuellement connus, le limiteur est monobloc et est constitué d'une tôle emboutie dont le profil est ouvert, à savoir qui a une section transversale en forme générale de U, le fond de ce U étant fixé à la caisse du véhicule.

Lors des accélérations auxquelles le moteur est soumis vers l'avant ou vers l'arrière, par rapport à la caisse du véhicule, l'une des deux butées élastiques que comporte le support élastique, devant et derrière, vient en appui de butée sur la face intérieure de l'aile correspondante du limiteur, ce qui limite le débattement de ce support et l'empêche de prendre une amplitude exagérée dans un sens ou dans l'autre.

Quant à l'ouverture de la section transversale du limiteur, elle a pour but de permettre d'y introduire le support élastique lors du montage ; la mise en place reste cependant difficile, elle doit rester manuelle, et il subsiste un risque de perte du support ou de son désengagement partiel par rapport à sa position normale dans le limiteur, pendant les opérations de manutention des éléments de support montés. Ceci présente le grave inconvénient que si ce désengagement partiel est inaperçu du monteur, la suspension du moteur sera défectueuse.

Cette ouverture de la section transversale du limiteur, nécessitée par les impératifs du montage, a pour autre inconvénient que lors d'une mise en butée du support élastique contre la face intérieure d'une des ailes du limiteur, seule cette aile supporte les efforts dus au déplacement du moteur. Il en résulte la nécessité d'utiliser une tôle de forte épaisseur, avec en outre des ailes de surface relativement importante. Pour éviter les déformations du limiteur, il convient de plus de le renforcer au niveau des pliures entre son fond et les ailes, par des nervures de renfort, ou des "coups-de-poing".

Ces dispositions augmentent bien entendu le prix de revient des éléments de support.

Le but de l'invention est de remédier à tous ces inconvénients des éléments de support connus.

A cet effet, un élément de support conforme à l'invention, du type général défini au début, est caractérisé en ce qu'il comporte en outre une entretoise de fermeture rapportée assurant une liaison rigide entre les extrémités libres desdites ailes du limiteur.

La tôle dans laquelle est embouti le limiteur pourra ainsi être notablement moins épaisse que celle des limiteurs connus, puisque les efforts s'exerçant sur une aile du limiteur, du fait de l'appui de la butée correspondante du support élastique, seront transmis simultanément à l'autre aile par l'entretoise. En d'autres termes, on augmente la raideur mécanique du limiteur dans la direction des efforts exercés par le moteur, tout en diminuant la dépense en matière première, et moyennant un usinage d'entretoise simplifié, celle-ci pouvant être constituée d'une simple, barrette plate.

D'autres caractéristiques et avantages de l'invention apparaîtront à la lecture de la description faite ci-dessous d'un mode de réalisation d'un élément de support, donné à titre de simple exemple, avec référence aux figures du dessin annexé dans lequel :

— la figure 1 est une vue en élévation de face d'un élément de support conforme à l'invention ;

— la figure 2 est une vue de profil de cet élément; et

— la figure 3 est une vue en plan de cet élément.

Sur les différentes figures, le support élastique a été référencé 1 et le limiteur de débattement 2. Le support élastique 1 est constitué de deux blocs d'élastomère 3 séparés par une plaquette 4 et adhérisés entre une armature inférieure 5 et une armature supérieure 6, toutes deux réalisées en tôle pliée.

L'armature inférieure 5 peut être fixée sur la caisse d'un véhicule grâce à une vis 7 soudée à cette armature, et l'armature supérieure 6 peut être fixée au moteur, pour assurer sa suspension, par deux vis 8 soudées sur des pattes pliées et inclinées 9.

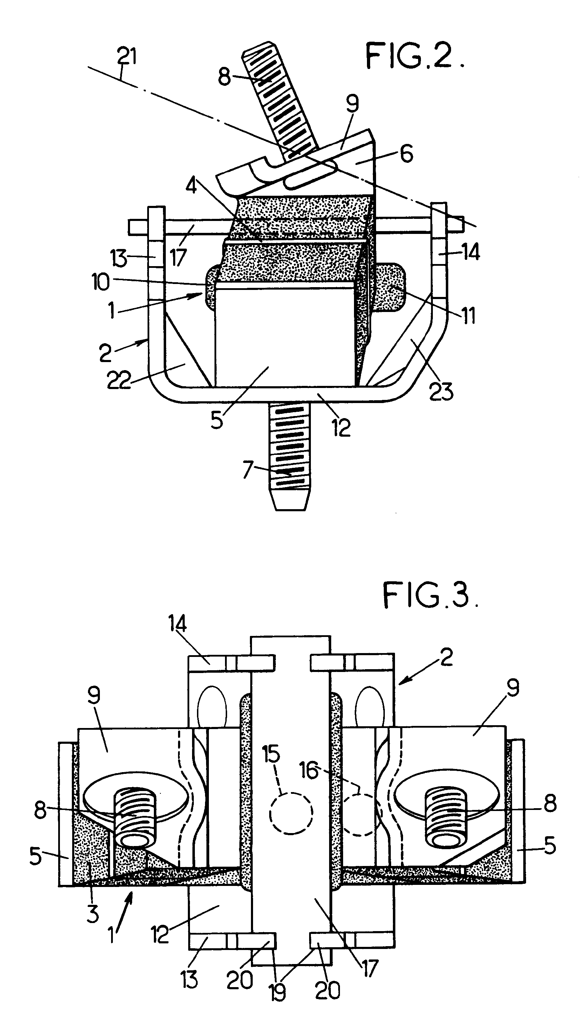

Sur la figure 2 on voit par ailleurs que le support élastique 1 comporte une butée avant 10 et une butée arrière 11. Le moteur de véhicule s'étend sur la gauche de cette figure et l'habitacle sur la droite, en supposant le moteur à l'avant.

Quant au limiteur de débattement 2, il est constitué d'une tôle pliée en forme de U, comportant un fond 12 et deux ailes, avant et arrière, 13 et 14. Le fond 12 est percé d'un trou 15 pour le passage de la vis de fixation 7, et d'un trou 16 destiné à recevoir un pion de positionnement ou détrompeur, ces deux trous étant cylindriques.

Dans les éléments de support connus dont il a été question plus haut, le support élastique 1 est maintenu en place dans le limiteur par deux pattes pliées horizontalement l'une vers l'autre et partant du milieu du bord supérieur des deux ailes telles que 13 et 14. Le montage du support élastique est rendu difficile par la présence de ces pattes, et doit être manuel ; il ne peut être robotisé. En outre, comme cela a été mentionné plus haut, ce maintien en place du support n'est pas parfait et il risque d'être déplacé et même perdu au cours des manutentions. De plus, au cours de ce montage manuel le support élastique doit être glissé sous les deux pattes en même temps que sa vis de fixation 7 doit être introduite dans le trou du fond 12 du limiteur. C'est pourquoi ce trou doit être oblong, ce qui complique l'usinage, perd de la matière et affaiblit ce fond du limiteur.

Grâce à l'invention, au contraire, les ailes 13 et 14 du limiteur sont dépourvues de pattes, ce qui permet de faciliter grandement le montage du support élastique : ce montage peut être aisément robotisé, du fait qu'il peut s'effectuer par une simple descente verticale du support élastique 1 entre les ailes 13 et 14 du limiteur, sa vis 7 pénétrant directement dans le trou 15 du fond 12 ; c'est pourquoi, comme précisé plus haut, les trous 15 et 16 peuvent être cylindriques.

Ceci étant, les pattes de maintien des dispositifs connus sont remplacées selon l'invention par une entretoise 17 qui ferme le profilé en U du limiteur 2 et relie rigidement les extrémités des deux ailes 13 et 14.

Avantageusement, cette entretoise 17 est constituée d'une simple barrette plate découpée, dont la forme est bien visible à la figure 3. La faisabilité du limiteur est donc plus grande que celle des limiteurs connus.

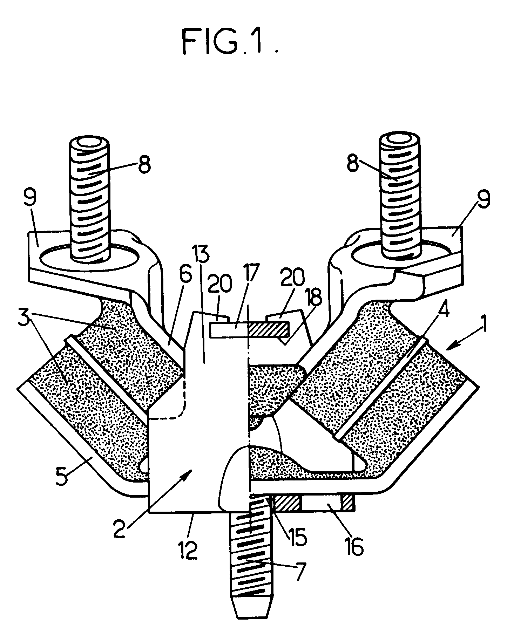

Les extrémités de la barrette d'entretoise 17 sont serties sur les extrémités respectives des ailes 13 et 14 du limiteur de débattement 2. Pour ce faire, ces extrémités des ailes 13 et 14 comportent chacune deux branches tournées l'une vers l'autre 20, constituant une mortaise 18 dont la forme est visible sur la figure 1, l'extrémité correspondante de l'entretoise 17 comportant quant à elle deux encoches en regard 19, visibles sur la figure 3, permettant aux extrémités de l'entretoise 17 d'être introduites dans ces mortaises 18. Le sertissage s'effectue ensuite, après cette introduction, (le support élastique 1 étant à ce moment comprimé verticalement) en resserrant l'une vers l'autre les deux branches 20 des ailes 13 et 14, ce qui emprisonne l'entretoise et empêche par suite tout dégagement intempestif ou tout déplacement du support élastique 1 dans le limiteur 2.

En outre on voit, notamment en observant la figure 2, que cette entretoise 17 transmettra d'une aile à l'autre du limiteur 2 les efforts dus à la mise en appui des butées 10 ou 11 respectivement sur l'aile 13 on sur l'aile 14 par suite de la déformation du support élastique 1 due aux accélérations du moteur (lesquelles se produisent dans la direction 21, dans un sens ou dans l'autre). C'est ce qui permet d'utiliser, pour constituer par emboutissage le limiteur 2, une tôle notablement moins épaisse que dans les limiteurs connus, avec une largeur plus réduite des ailes 13 et 14, d'où un gain de matière non négligeable.

Il y a lieu de noter enfin que le renforcement du limiteur au niveau des lignes de pliage entre le fond 12 et les ailes 13 et 14 peut être allégé, encore par rapport aux limiteurs connus. Un seul "coup-depoing" de renfort antidépliage 22, 23 est nécessaire de chaque côté.

## Revendications

1. Elément de support à limiteur de débattement, en particulier pour moteur de véhicule automobile, du type comportant :

a) un support élastique (1) pourvu de moyen de fixation (7, 8) d'une part à la caisse du véhicule, d'autre part au moteur, et

b) un limiteur de débattement (2) également fixé à la caisse et comportant deux ailes (13, 14) encadrant ledit support élastique (1) et propres à en limiter le débattement vers l'avant et vers l'arrière dudit véhicule, caractérisé en ce qu'il comporte en outre une entretoise de fermeture rapportée (17 assurant une liaison rigide entre les extrémités libres desdites ailes (13, 14) du limiteur.

2. Elément selon la revendication 1, caractérisé en ce que ladite entretoise (17) est constituée par une barrette découpée, dont les extrémités sont serties sur les extrémités respectives des ailes (13, 14) du limiteur de débattement (2).

3. Elément selon la revendication 2, caractérisé en ce que les extrémités des ailes (13, 14) du limiteur de débattement (2) comportent chacune deux branches (20) tournées l'une vers l'autre et constituant une mortaise (18), l'extrémité correspondante de l'entretoise (17) comportant deux encoches en regard (19), lui permettant d'être introduite dans la mortaise (18) respective, cette extrémité de l'entretoise pouvant ensuite être sertie dans la mortaise (18) par rapprochement mutuel desdites branches (20).

## Patentansprüche

1. Lagerelement mit Wegbegrenzung, insbesondere für einen Kraftfahrzeugmotor, mit

a) einem elastischen Lager (1) mit Mitteln (7, 8) zum Befestigen an der Karrosserie des Fahrzeugs einerseits und am Motor andererseits und

b) einem Federungswegbegrenzer (2), der ebenfalls an der Karrosserie befestigt ist und zwei Schenkel (13, 14) aufweist, die das elastische Lager (1) umgeben und geeignet sind, dessen Federungsweg in Richtung des vorderen Teils und in Richtung des hinteren Teils des Fahrzeugs zu begrenzen, **dadurch gekennzeichnet**, daß es außerdem einen eingesetzten Abschlußsteg (17) aufweist, der eine feste Verbindung zwischen den freien Enden der Schenkel (13, 14) des Begrenzers sicherstellt.

2. Lagerelement nach Anspruch 1, **dadurch gekennzeichnet**, daß der Abschlußsteg (17) von einem ausgeschnittenen Steg gebildet ist, dessen Enden von den jeweiligen Enden der Schenkel (13, 14) des Federungswegbegrenzers (2) eingefaßt sind.

3. Lagerelement nach Anspruch 2, **dadurch** **gekennzeichnet**, daß die Enden der Schenkel (13, 14) des Federungswegbegrenzers (2) jeweils zwei aufeinander zu gerichtete und einen Einschnitt (18) bildende Abschnitte (20) aufweisen, wobei das jeweilige Ende des Abschlußsteges (17) zwei gegenüberliegende Einschnitte (19) aufweist, mittels derer es in den jeweiligen Einschnitt (18) einbringbar ist, wobei das Ende des Abschlußsteges anschließend in den Einschnitt (18) durch gegenseitiges Annähern der Abschnitte (20) im Einschnitt (18) eingefaßt werden kann.

**Claims**

1. Supporting element with an oscillation limiter, particularly for the engine of an automotive vehicle, of the type having :

    a) a flexible support (1) provided with means of fixing (7, 8) on the one hand to the body of the vehicle and on the other hand to the engine, and
    b) an oscillation limiter (2) also fixed to the body and having two wings (13, 14) enclosing the said flexible support (1) and suitable for limiting its oscillation towards the front and rear of the said vehicle, characterised in that it has in addition an attached locking crosspiece (17) providing a rigid connection between the free ends of the said wings (13, 14) of the limiter.

2. Element according to claim 1, characterised in that the said crosspiece (17) is formed by a cropped plate, whose ends are clamped onto the respective ends of the wings (13, 14) of the oscillation limiter (2).

3. Element according to claim 2, characterised in that the ends of the wings (13, 14) of the oscillation limiter (2) each have two legs (20) oriented towards each other and forming a mortice (18), the corresponding end of the crosspiece (17) having two opposing recesses (19), enabling it to be inserted into the respective mortice (18), this end of the crosspiece then being able to be clamped in the mortice (18) by the mutual bringing together of the said legs (20).

# FIG.1.

FIG.2.

FIG.3.